# EUROPÄISCHE PATENTSCHRIFT

(11) **EP 2 837 072 B1**
(45) Veröffentlichungstag und Bekanntmachung des Hinweises auf die Patenterteilung: **23.12.2020**
(21) Anmeldenummer: 13721590.1
(22) Anmeldetag: 12.04.2013
(51) Int. Cl.: H01S 3/13, H01S 3/067, H01S 3/08, H01S 3/094

(54) **VERFAHREN UND VORRICHTUNG ZUR REDUKTION VON MODENINSTABILITÄT IN EINEM LICHTWELLENLEITER**
METHOD AND DEVICE FOR REDUCING MODE INSTABILITY IN A LIGHT WAVEGUIDE
PROCÉDÉ ET DISPOSITIF DE RÉDUCTION DE L'INSTABILITÉ DE MODE DANS UN GUIDE D'ONDE OPTIQUE

(30) Priorität: 12.04.2012 EP 12002588
(43) Veröffentlichungstag der Anmeldung: 18.02.2015
(73) Patentinhaber: Fraunhofer-Gesellschaft zur Förderung der angewandten Forschung e.V., 80686 München (DE); Friedrich-Schiller-Universität Jena, 07743 Jena (DE)
(72) Erfinder: JÁUREGUI MISAS, César, 07745 Jena (DE); OTTO, Hans-Jürgen, 78655 Dunningen (DE); STUTZKI, Fabian, 07747 Jena (DE); JANSEN, Florian, 78054 Villingen-Schwenningen (DE); EIDAM, Tino, 07751 Jena (DE); LIMPERT, Jens, 07751 Jena (DE); TÜNNERMANN, Andreas, 99425 Weimar (DE)
(74) Vertreter: Isfort, Olaf
(86) Internationale Anmeldenummer: PCT/EP2013/001071
(87) Internationale Veröffentlichungsnummer: WO 2013/152862

(56) Entgegenhaltungen:
- WO-A1-98/38710
- WO-A1-2009/036942
- WO-A1-2010/102833
- JP-A- 2003 023 208
- US-A- 5 062 150
- US-B2- 7 835 608
- JAUREGUI C ET AL: "Temperature-induced index gratings and their impact on mode instabilities in high-power fiber laser systems", OPTICS EXPRESS, OSA (OPTICAL SOCIETY OF AMERICA), WASHINGTON DC, (US), Bd. 20, Nr. 1, 21. November 2011 (2011-11-21), Seiten 440-451, XP009171775, ISSN: 1094-4087 [gefunden am 2011-12-21]
- JAUREGUI C ET AL: "On the thermal origin of mode instabilities in high power fiber lasers", PROCEEDINGS OF SPIE, SPIE, US, Bd. 8237, 23. Januar 2012 (2012-01-23), Seiten 82370D/1-82370D/6, XP009171776, ISSN: 0277-786X, DOI: 10.1117/12.908279
- KRISTIAN RYMANN HANSEN ET AL: "Thermo-optical effects in high-power Ytterbium-doped fiber amplifiers", OPTICS EXPRESS, Bd. 19, Nr. 24, 21. November 2011 (2011-11-21), Seiten 23965-23980, XP055074638, ISSN: 1094-4087, DOI: 10.1364/OE.19.023965
- B. WARD ET AL: "Origin of thermal modal instabilities in large mode area fiber amplifiers", OPTICS EXPRESS, Bd. 20, Nr. 10, 7. Mai 2012 (2012-05-07), Seiten 11407-11422, XP055074645, ISSN: 1094-4087, DOI: 10.1364/OE.20.011407
- Tino Eidam ET AL: "Preferential gain photonic-crystal fiber for mode stabilization at high average powers", Optics Express, vol. 19, no. 9, 25 April 2011 (2011-04-25) , page 8656, XP055074648, ISSN: 1094-4087, DOI: 10.1364/OE.19.008656

## Beschreibung

Die Erfindung betrifft ein Verfahren und Vorrichtungen zur Reduktion von Modeninstabilität in einem Lichtwellenleiter. Bei Modeninstabilität wird ein durch den Lichtwellenleiter propagierendes Lichtsignal ab einer Schwelle der Leistung des Lichtsignals instabil, und Energie wird von einer Grundmode in Moden höherer Ordnung übertragen.

Die Weiterentwicklung von Faserlasern in jüngster Zeit hat dazu geführt, dass Lichtwellenleiter oder optische Fasern als aktives Medium ein zuverlässiges Konzept für beispielsweise Hochleistungslaser liefern. Die Entwicklung von Niedrigenergielasern zu Hochleistungslasern für industrielle Anwendungen basiert auf der Fähigkeit von Lichtwellenleitern, hohe Leistung handhaben zu können. Das sehr gute Verhältnis von Oberfläche zu aktivem Volumen erlaubt es, Wärme effizient abzuführen. Dies ist eine hervorragende Voraussetzung für einen Hochleistungsbetrieb. Allerdings führen Bedingungen im Lichtwellenleiter zu anderen Problemen. So führt beispielsweise die Einschränkung des Lichtsignals auf den Kern des Lichtwellenleiters zu hoher Lichtintensität und zu Wechselwirkungen zwischen dem Material des Lichtwellenleiters und dem Lichtsignal. Dabei entstehen insbesondere auch schwer zu kontrollierende nicht-lineare Effekte. Damit wird die Signalqualität stark beeinträchtigt.

Multimoden-Lichtwellenleiter oder Multimodefasern, in denen sich eine Vielzahl von Moden ausbreiten kann, haben ein stark strukturiertes Strahlprofil. In Singlemode-Lichtwellenleitern oder Singlemodefasern, die meist einen sehr kleinen Kerndurchmesser haben, kann sich nur die sogenannte Grundschwingung oder Grundmode ausbreiten, deren Intensität in radialer Richtung näherungsweise normalverteilt ist. Die Anzahl der auftretenden Moden beeinflusst die Signalübertragung, da jede Mode einen unterschiedlich langen Lichtweg nimmt. Deshalb zeigen Multimodefasern mit zunehmender Länge eine stärkere Signalverfälschung (auch Modendispersion genannt) als Singlemodefasern. Damit sind Singlemode-Lichtwellenleiter zur Signalübertragung über weite Strecken besser geeignet.

Lichtwellenleiter sollten demnach derart ausgelegt werden, dass nicht-lineare Effekte und Wechselwirkungen mit dem Fasermaterial reduziert werden. Am einfachsten und effektivsten werden nicht-lineare Effekte durch ein Vergrößern des Durchmessers des Kerns reduziert. Dadurch wird zum Einen die Intensität des Lichts im Kern reduziert und zum Anderen kann, beispielsweise bei doppelmanteligen Lichtwellenleitern, die Absorption von Pumplicht erhöht werden. Aufgrund der verbesserten Absorption des Pumplichts kann der Lichtwellenleiter verkürzt werden und damit können nicht-lineare Effekte reduziert werden.

Bei einem großen Kerndurchmesser des Lichtwellenleiters ist es allerdings schwierig, einen Singlemode-Betrieb oder auch einen Betrieb mit nur wenigen Moden umzusetzen, insbesondere im Hochleistungsbetrieb. Hierzu müssen zusätzliche Maßnahmen ergriffen werden, vor allem bei einer hohen thermischen Belastung. Es hat sich allerdings gezeigt, dass solche Maßnahmen zu Modeninstabilität bei hohen Leistungen führen können. Dabei wird das Ausgangsignal des Lichtwellenleiters oder eines damit realisierten Faserlasers instabil, sobald eine Leistungsschwelle überschritten wird. Es wird Energie von einer Grundmode in Moden höherer Ordnung übertragen. Das z.B. ursprünglich stabil Gauß-förmige Strahlprofil der im Lichtwellenleiter propagierenden Strahlung beginnt sich zu verändern und das Strahlprofil fluktuiert zeitlich aufgrund einer zeitlich veränderlichen Überlagerung der Grundmode mit einer oder mehreren Moden höherer Ordnung. Das Zeitverhalten dieser Fluktuationen kann deterministisch oder, je nach Leistung der propagierenden Strahlung, auch zufällig oder chaotisch sein.

JAUREGUI C ET AL: "Temperature-induced index gratings and their impact on mode instabilities in high-power fiber laser systems",OPTICS EXPRESS, Bd. 20, Nr. 1, 21. November 2011, Seiten 440-451 beschreibt die Ursache und Auswirkung von Modeninstabilität in Hochleistungsfaserlasersystemen.

Davon ausgehend liegt der vorliegenden Erfindung die Aufgabe zugrunde, ein Verfahren und Vorrichtungen zur Stabilisierung des Ausgangsignals eines Lichtwellenleiters bereitzustellen.

Die Erfindung löst die Aufgabe nach Anspruch 1 dadurch, dass eine Temperaturvariation entlang des Lichtwellenleiters vermindert und/oder Veränderungen im Lichtwellenleiter, die durch räumliche Temperaturvariation aufgrund von Modeninterferenz verursacht werden, reduziert werden.

Zur Umsetzung des Verfahrens ist ein Einkoppelelement, beispielsweise umfassend ein aktives und/oder ein passives optisches Element, zum Steuern der Einkopplung eines Eingangsignals in den Lichtwellenleiter vorgesehen. Das aktive optische Element kann dabei beispielsweise ein akusto-optischer Deflektor, ein computergeneriertes Hologramm, eine Pockelszelle oder eine adaptive Optik, wie z.B. ein adaptiver Spiegel, sein. Darüber hinaus ist erfindungsgemäß eine Kontrolleinheit zur Erfassung des Ausgangsignals des Lichtwellenleiters zum Zwecke der Regelung des Einkoppelelements vorgesehen. Die Kontrolleinheit überwacht dabei das Ausgangssignal und erzeugt ein Stellsignal zur Beeinflussung des Einkoppelelements, um auf diese Weise das Ausgangssignal zu stabilisieren.

Eine Modeninterferenz und damit eine Modeninstabilität resultiert letztlich daher, dass zumindest zwei Moden beim Einkoppeln in den Lichtwellenleiter angeregt werden. Daher führt eine genaue Kontrolle der Einkopplung zu einer Reduktion der Modeninstabilität. Mit dem aktiven optischen Element können die in die Moden gekoppelte Energie und deren relative Phase festgelegt werden. Mit dem Einkoppelelement kann sogar gezielt erreicht werden, dass Energie des Lichtsignals von einer Mode höherer Ordnung im Lichtwellenleiter in eine Grundmode übertragen wird. Dies führt zu einem Reinigungseffekt des Lichtsignals (auch "Beam-Cleaning" Effekt genannt).

Eine weitere Ausführungsform der Erfindung betrifft eine Vorrichtung gemäß Anspruch 2.

Weitere Merkmale, Einzelheiten und Vorteile der Erfindung ergeben sich aus dem Wortlaut der Anspüche sowie aus der nachfolgenden Beschreibung eines Ausführungsbeispiels sowie weiterer, nicht unter die Erfindung fallender Anordnungen anhand der Figuren. Es zeigen:
- Figur 1: einen Lichtwellenleiter mit Temperierelement und einem Temperaturverlauf entlang des Lichtwellenleiters;
- Figur 2: einen Lichtwellenleiter mit einem aktiven Einkoppelelement und einer Kontrolleinheit gemäß einer Ausführungsform der Erfindung;
- Figur 3: eine Verstärkervorrichtung mit einem Strahlteiler und einem Verstärkerelement;
- Figur 4: einen Lichtwellenleiter im Querschnitt mit einem aktiven und einem passiven Kern;
- Figur 5: einen Lichtwellenleiter im Querschnitt mit einer veränderten Geometrie eines aktiven Kerns;
- Figur 6: einen Lichtwellenleiter im Längsschnitt mit einem konisch verlaufenden Querschnitt;
- Figur 7: einen Lichtwellenleiter im Längsschnitt mit einem konisch verlaufenden Mantel
- Figur 8: einen Lichtwellenleiter im Querschnitt mit über den Querschnitt verteilten Absorptionselementen; und
- Figur 9: einen Lichtwellenleiter im Längsschnitt mit einem über die Länge des Lichtwellenleiters variablen Brechungsindex.

Die Bezugszeichen und deren Bedeutung sind zusammengefasst in der Bezugszeichenliste angegeben. Im allgemeinen bezeichnen dieselben Bezugszeichen dieselben Teile.

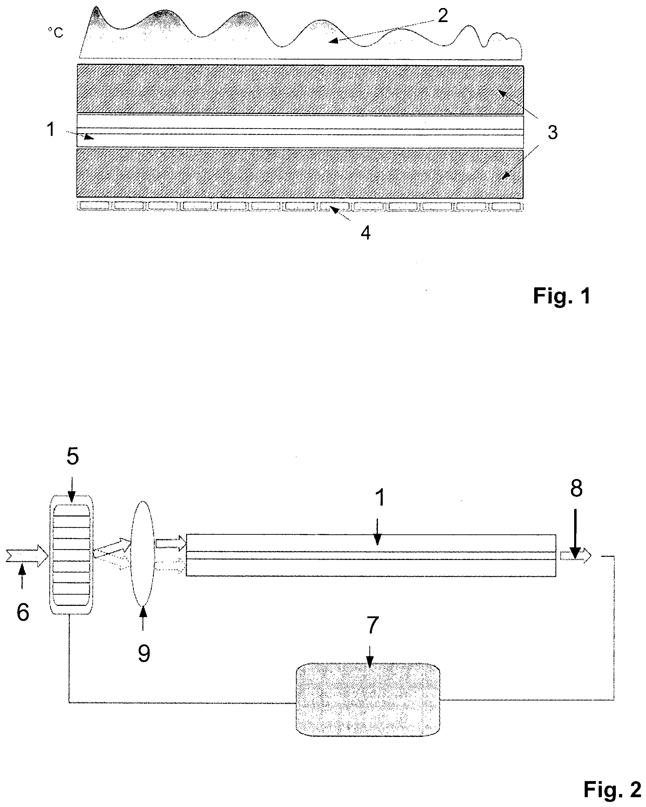

Figur 1 zeigt in einer schematischen Darstellung einen Lichtwellenleiter 1 mit einer durch Modeninterferenz erzeugten Temperaturvariation 2 entlang des Lichtwellenleiters 1 und ein Temperierelement 3. Das Temperierelement 3 ist dabei zum Kühlen und Heizen entlang des Lichtwellenleiters 1 vorgesehen. In der dargestellten Anordnung ist das Temperierelement 3 als eine Ummantelung des Lichtwellenleiters 1 ausgebildet. Das Temperierelement 3 kann im Hochleistungsbetrieb entstehende Temperaturvariationen 2 ausgleichen und vermindert damit einen Temperaturgradienten entlang des Lichtwellenleiters.

Weiterhin sind in dieser Anordnung Heizelemente und Kühlelemente 4 entlang des LichtWellenleiters 1 zum Generieren eines variablen Temperaturverlaufs entlang des Lichtwellenleiters 1 vorgesehen. Mit Hilfe der Heiz- und Kühlelemente 4 kann der Temperaturverlauf variabel über die Länge des Lichtwellenleiters eingestellt werden.

Figur 2 zeigt eine Ausführungsform der Erfindung. Figur 2 zeigt in einer schematischen Darstellung einen Lichtwellenleiter 1 mit einem aktiven Einkoppelelement 5 für ein Eingangssignal 6 und einer Kontrolleinheit 7, die ein Ausgangssignal 8 erfasst und daraus ein dem Einkoppelelement 5 zugeführtes Stellsignal ableitet. Das Einkoppelelement 5 umfasst dabei ein aktives Element und ein passives Element 9, beispielsweise eine optische Linse. Das Einkoppelelement 5 steuert dabei Einkoppelbedingungen (z.B. die Einkoppelgeometrie und die Fokussierung) des Eingangssignals in den Lichtwellenleiter 1. Die Kontrolleinheit 7 wertet das Ausgangssignal 8 aus, um beispielsweise eine Modeninstabilität festzustellen und ändert gegebenenfalls Einstellungen des Einkoppelelements 5, um das Ausgangssignal 8 zu stabilisieren.

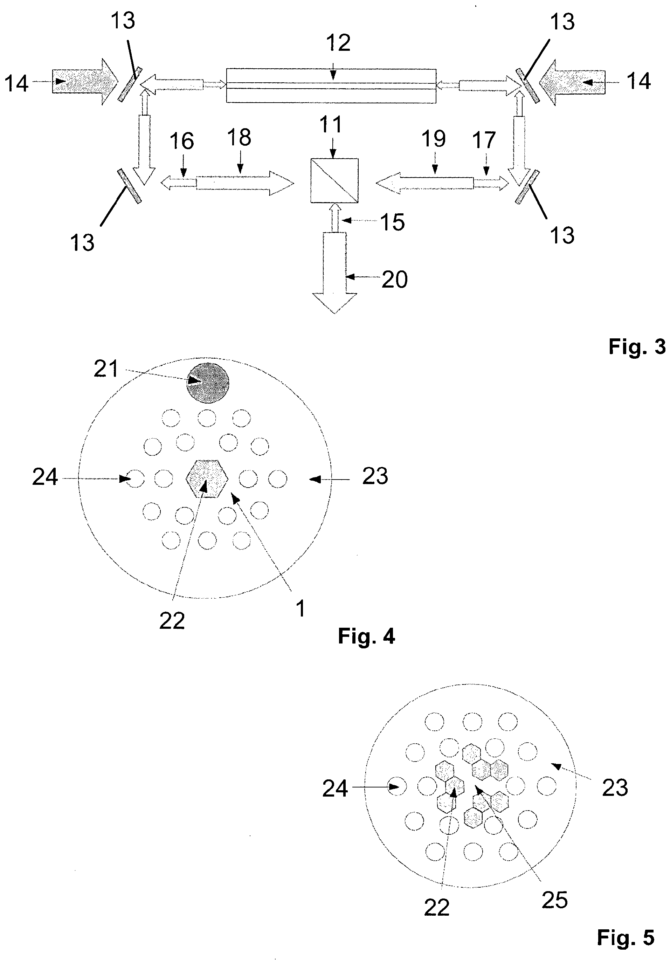

Figur 3 zeigt in einer schematischen Darstellung eine Verstärkervorrichtung 10 mit einem Strahlteiler 11 und einem Verstärkerelement 12. Das Verstärkerelement 12 ist dabei ein Lichtwellenleiter 1 mit geeigneter Dotierung. Die Verstärkervorrichtung 10 weist weiterhin Spiegel 13 und zwei optische Pumpeinheiten 14 auf.

Der Strahlteiler 11 teilt ein Eingangssignal 15 in zwei vorzugsweise symmetrische Lichtsignale 16, 17 auf, welche über die Spiegel 13 in das Verstärkerelement 12 eingekoppelt werden. Dabei wird das Signal 16 an einem Ende und das Signal 17 am anderen Ende des Verstärkerelements 12 eingekoppelt. Die Pumpeinheiten 14 sind jeweils an den Enden des Verstärkerelements 12 angeordnet und Pumpen optisch zur Verstärkung der Signale 16, 17 an den jeweiligen Enden das Verstärkerelement 12. Beim Austreten aus dem Verstärkerelement 12 werden die verstärkten Lichtsignale 18, 19 zum Strahlteiler 11 zur Rekombination zu einem Ausgangssignal 20 gelenkt.

Figur 4 zeigt in einer schematischen Darstellung einen Lichtwellenleiter 1 im Querschnitt mit einem passiven Kern 21 und einem aktiven Kern 22 in einem Pumpbereich 23 des Lichtwellenleiters 1. Dabei wird ein Ausgangssignal des aktiven Kerns 22 teilweise oder vollständig zurück in den passiven Kern 21 gespeist. Der passive Kern 21 ist dabei einem gleichen Temperaturprofil und damit den damit einhergehenden Brechungsindexveränderungen ausgesetzt wie der aktive Kern 22. Auf Grund der optischen Reziprozität des Systems wird bei einer Rückführung des Ausgangssignals über den passiven Kern 21 der Effekt der thermischen Brechungsindexveränderung umgekehrt und das resultierende Ausgangssignal des passiven Kerns 21 weist eine hohe Signalqualität auf.

Figur 5 zeigt in einer schematischen Darstellung einen Lichtwellenleiter 1 im Querschnitt mit einer veränderten Geometrie 25 des aktiven Kerns 22. Dabei wird eine Disparität des Signalüberlapps in dem Bereich der Dotierung über eine Periode einer Modenschwebung reduziert. Die Geometrie 25 ist dabei derart angepasst, dass diese Temperaturvariationen im Lichtwellenleiter reduziert und damit die Schwelle der Modeninstabilität erhöht.

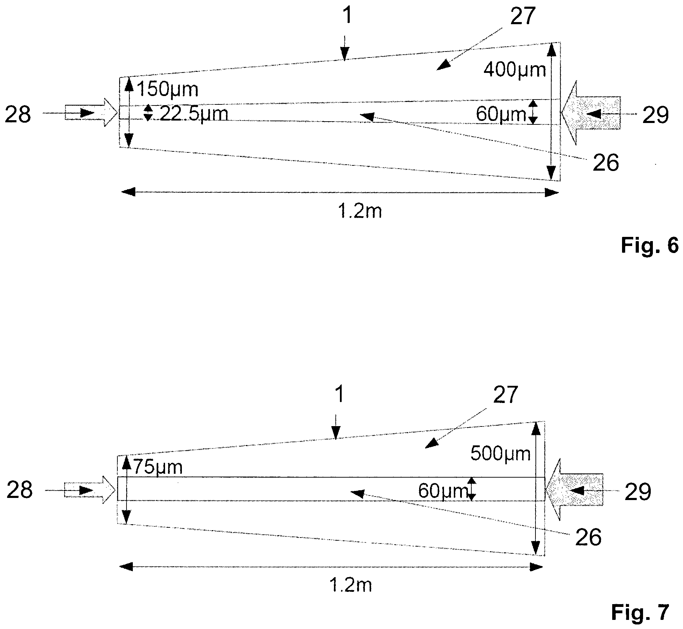

Figur 6 zeigt in einer schematischen Darstellung einen Lichtwellenleiter 1 mit einem konisch verlaufenden Längsschnitt, wobei der Mantel 27 und der Signalkern 26 jeweils einen konisch verlaufenden Längsschnitt aufweisen. Der Mantel 27 und der dotierte Signalkern 26 können dabei unterschiedliche Profile aufweisen. Damit wird die Absorption der Pumpenergie angepasst an die Temperaturvariation 2 entlang des Lichtwellenleiters 1.

Figur 7 zeigt in einer schematischen Darstellung einen Lichtwellenleiter 1 mit einem konisch verlaufenden Längsschnitt, wobei nur der Mantel 27 und nicht der Signalkern 26 konisch verläuft. Damit kann insbesondere das Oberflächenverhältnis von Signalkern 26 zu Mantel 27 variiert werden.

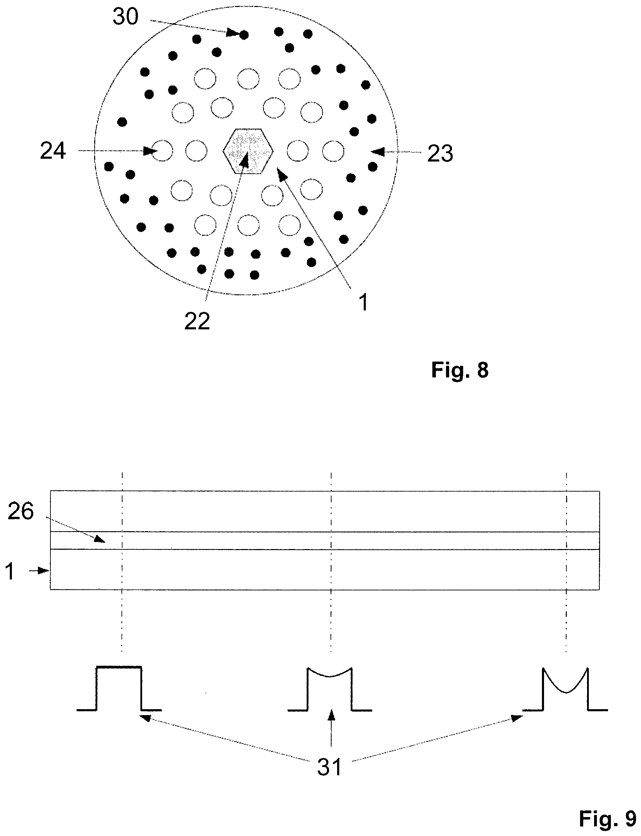

Figur 8 zeigt in einer schematischen Darstellung einen Lichtwellenleiter 1 im Querschnitt mit aktivem Kern 22 mit Kanälen 24 in einem Pumpbereich 23, die einen niedrigen Brechungsindex aufweisen. Der Lichtwellenleiter 1 ist über den Querschnitt mit Absorptionselementen 30 versehen. Die Absorptionselemente 30 weisen dabei ein Absorptionsspektrum im Bereich der Arbeitswellenlänge des in dem Lichtwellenleiter propagierenden Lichtsignals auf. Die Verteilung der Absorptionselemente 30 über den Querschnitt (und bevorzugt auch über die Länge) des Lichtwellenleiters 1 ist geeignet gewählt, um Modeninstabilität zu reduzieren. Dabei ist im Mantel der Überlapp mit Moden höherer Ordnung grösser ist als mit der Grundmode des Lichtsignals. Über die Länge des Lichtwellenleiter 1 in Propagationsrichtung des Lichtsignals nimmt die Konzentration der Absorptionselemente 30 vorzugsweise ab. Die Absorptionselemente 30 fungieren in dieser Anordnung als Modenfilter.

In einer weiteren Anordnung ist vorgesehen, dass die Absorptionselemente 30 ein Absorptionsspektrum im Bereich der Pumpwellenlänge aufweisen. Durch geeignete Verteilung der Absorptionselemente 30 im Lichtwellenleiter 1 kann die Energieabsorption gesteuert werden, wodurch Temperaturvariationen 2 entlang des Lichtwellenleiters 1 vermindert werden können.

Figur 9 zeigt in einer schematischen Darstellung einen Lichtwellenleiter 1 im Längsschnitt mit einem über die Länge des Lichtwellenleiters variablen radialen Brechungsindexverlauf 31. Der variable Brechungsindexverlauf 31 im Lichtwellenleiter 1 kompensiert (zumindest teilweise) thermisch induzierte Veränderungen des Brechungsindexverlaufs während des aktiven Betriebs des Lichtwellenleites 1.

### Bezugszeichenliste:

- 1: Lichtwellenleiter
- 2: Temperaturvariation
- 3: Temperierelement
- 4: Heiz/Kühlelement
- 5: Einkoppelelement
- 6: Eingangssignal
- 7: Kontrolleinheit
- 8: Ausgangssignal
- 9: Optisches Instrument
- 10: Verstärkervorrichtung
- 11: Strahlteiler
- 12: Verstärkerelement
- 13: Spiegel
- 14: Pumpeinheit
- 15: Eingangssignal
- 16: Signal
- 17: Signal
- 18: Verstärktes Signal
- 19: Verstärktes Signal
- 20: Ausgangssignal
- 21: Passiver Kern
- 22: Aktiver Kern
- 23: Pumpbereich
- 24: Kanäle
- 25: Geometrie
- 26: Signalkern
- 27: Mantel
- 28: Eingangssignal
- 29: Pumpenergie
- 30: Absorptionselemente
- 31: Brechungsindex

## Patentansprüche

1. Verfahren zur Reduktion von Modeninstabilität in einem Lichtwellenleiter (1), umfassend ein Vermindern einer Temperaturvariation (2) entlang des Lichtwellenleiters (1) aufgrund von Modeninterferenz und/oder ein Reduzieren von Veränderungen im Lichtwellenleiter (1), die durch räumliche Temperaturvariation aufgrund von Modeninterferenz verursacht werden, **dadurch gekennzeichnet, dass** ein aktives Einkoppelelement (5) zum Steuern der Einkopplung eines Eingangsignals (6) in den Lichtwellenleiter (1) vorgesehen ist, wobei eine Kontrolleinheit (7) ein Ausgangssignal (8) des Lichtwellenleiters (1) überwacht und ein Stellsignal zur Beeinflussung des Einkoppelelements (5) erzeugt, um das Ausgangssignal (8) zu stabilisieren.

2. Vorrichtung zur Ausführung des Verfahrens nach Anspruch 1 mit einem Lichtwellenleiter (1) für einen Hochleistungsbetrieb, **gekennezeichnet durch** ein aktives Einkoppelelement (5) zum Steuern der Einkopplung eines Eingangsignals (6) in den Lichtwellenleiter (1), und eine Kontrolleinheit (7), die ein Ausgangssignal (8) des Lichtwellenleiters (1) erfasst und daraus ein dem Einkoppelelement (5) zugeführtes Stellsignal ableitet,
wobei die Kontrolleinheit dazu ausgebildet ist, Modeninstabilität in dem Lichtwellenleiter zu reduzieren, umfassend ein Vermindern einer Temperaturvariation (2) entlang des Lichtwellenleiters (1) aufgrund von Modeninterferenz und/oder ein Reduzieren von Veränderungen im Lichtwellenleiter, die durch räumliche Temperaturvariation aufgrund von Modeninterferenz verursacht werden.

## Claims

1. A method for reducing mode instability in an optical waveguide (1), comprising a reduction in temperature variation (2) along the optical waveguide (1) due to mode interference and/or a reduction in changes in the optical waveguide (1) that are caused by spatial temperature variation due to mode interference, **characterised in that** an active coupler element (5) is provided for controlling the coupling of an input signal (6) into the optical waveguide (1), wherein a control unit (7) monitors an output signal (8) from the optical waveguide (1) and generates an actuating signal for influencing the coupler element (5) in order to stabilise the output signal (8).

2. A device for executing the method according to claim 1 with an optical waveguide (1) for high-performance operation,
**characterised by** an active coupler element (5) for controlling the coupling of an input signal (6) into the optical waveguide (1), and a control unit (7) which picks up an output signal (8) from the optical waveguide (1) and derives therefrom an actuating signal fed to the coupler element (5), the control unit being formed to reduce mode instability in the optical waveguide, comprising a reduction in temperature variation (2) along the optical waveguide (1) due to mode interference and/or a reduction in changes in the optical waveguide (1) that are caused by spatial temperature variation due to mode interference.

## Revendications

1. Procédé de réduction de l'instabilité de mode dans un guide d'ondes lumineuses (1), comprenant une réduction d'une variation de température (2) le long du guide d'ondes lumineuses (1) en raison de l'interférence de mode et/ou une réduction de modifications dans le guide d'ondes lumineuses (1), qui sont provoquées par une variation de température spatiale en raison de l'interférence de mode,
**caractérisé en ce qu'**un élément d'injection (5) actif est prévu pour commander l'injection d'un signal d'entrée (6) dans le guide d'ondes lumineuses (1), dans lequel une unité de contrôle (7) surveille un signal de sortie (8) du guide d'ondes lumineuses (1) et génère un signal de réglage servant à influencer l'élément d'injection (5) pour stabiliser le signal de sortie (8).

2. Dispositif servant à exécuter le procédé selon la revendication 1, avec un guide d'ondes lumineuses (1) pour un fonctionnement à puissance élevée, **caractérisé par** un élément d'injection (5) actif servant à commander l'injection d'un signal d'entrée (6) dans le guide d'ondes lumineuses (1), et une unité de contrôle (7), qui détecte un signal de sortie (8) du guide d'ondes lumineuses (1) et déduit sur cette base un signal de réglage amené à l'élément d'injection (5),
dans lequel l'unité de contrôle est réalisée pour réduire l'instabilité de mode dans le guide d'ondes lumineuses, comprenant une réduction d'une variation de température (2) le long du guide d'ondes lumineuses (1) en raison de l'interférence de mode et/ou une réduction de modifications dans le guide d'ondes lumineuses, qui sont provoquées par une variation de température spatiale en raison de l'interférence de mode.
